# EUROPÄISCHE PATENTSCHRIFT

(11) **EP 3 629 425 B1**
(45) Veröffentlichungstag und Bekanntmachung des Hinweises auf die Patenterteilung: **20.04.2022**
(21) Anmeldenummer: 19198855.9
(22) Anmeldetag: 23.09.2019
(51) Int. Cl.: B29C 45/00, B29C 45/16, B29L 31/34, B60L 53/16, H01R 13/52

(54) **KONTAKTGEHÄUSE FÜR EINE LADEDOSE EINES KRAFTFAHRZEUGS UND VERFAHREN ZUM HERSTELLEN EINER LADEDOSE EINES KRAFTFAHRZEUGS**
CONTACT HOUSING FOR A CHARGING SOCKET OF A MOTOR VEHICLE AND METHOD FOR PRODUCING A CHARGING SOCKET OF A MOTOR VEHICLE
BOÎTIER DE CONTACT POUR UNE BORNE DE CHARGE D'UN VÉHICULE AUTOMOBILE ET PROCÉDÉ DE FABRICATION D'UNE BORNE DE CHARGE D'UN VÉHICULE AUTOMOBILE

(30) Priorität: 25.09.2018 DE 102018123621
(43) Veröffentlichungstag der Anmeldung: 01.04.2020
(73) Patentinhaber: Lisa Dräxlmaier GmbH, 84137 Vilsbiburg (DE)
(72) Erfinder: Livk, Uros, 85748 Garching (DE)

(56) Entgegenhaltungen:
- EP-A1- 2 587 592
- EP-A2- 2 456 015
- WO-A1-90/07204
- DE-A1- 4 135 679
- DE-A1- 10 332 298
- DE-A1- 10 332 325
- DE-A1- 19 844 603
- DE-A1-102004 032 572
- DE-B3-102005 014 373
- US-A1- 2003 068 915

## Beschreibung

### Technisches Gebiet

Die Erfindung betrifft ein Kontaktgehäuse für eine Ladedose eines Kraftfahrzeugs, eine Ladedose für ein Kraftfahrzeug sowie ein Verfahren zum Herstellen einer Ladedose eines Kraftfahrzeugs.

### Stand der Technik

Rein elektrisch angetriebene Kraftfahrzeuge oder Plug-In-Hybridfahrzeuge weisen üblicherweise eine Ladedose auf, mit welcher ein Ladestecker zum Aufladen einer Batterie des betreffenden Fahrzeugs verbunden werden kann. Derartige Ladedosen weisen je nach verwendetem Steckertyp unterschiedliche stromführende und signalführende Kontaktstifte auf, die beim Aufladen der betreffenden Batterie mit entsprechenden Elementen des jeweiligen Ladesteckers kontaktiert werden. Derartige Ladedosen sind meistens hinter verschwenkbaren Klappen der betreffenden Fahrzeuge verborgen. Sobald ein Ladestecker in die Ladedose gesteckt werden soll, muss eine solche Klappe geöffnet werden, in Folge dessen die betreffende Ladedose unterschiedlichen Umwelteinflüssen, wie beispielsweise Feuchtigkeit oder Staub ausgesetzt werden kann. Da die Ladedose selbst u.a. in Form der Kontaktstifte stromführende Teile aufweist, ist es wünschenswert, dass die Ladedose insbesondere im Bereich der Kontaktstifte besonders gut gegen Staubeintritt oder Flüssigkeitseintritt geschützt wird.

Aus der WO 90/07204 A1 ist ein Verfahren zur Herstellung einer versiegelten Steckeranordnung bekannt.

Aus der DE 10 2004 032 572 A1 ist eine Verbindungsanordnung mit einer Trennwand bekannt.

Aus der US2003/068915 A1 ist ein elektrischer Verbinder mit einer integrierten Gleitringdichtung, die besonders in feuchten Umgebungen nützlich ist, bekannt.

Die EP 2 456 015 A2 beschreibt eine Steckdose eines Kraftfahrzeugs.

Die DE 10 2005 014373 B3 beschreibt ein Gehäuseteil für eine elektrische Steckvorrichtung.

Die DE 103 32 298 A1 beschreibt einen Druckkontakt-Steckverbinder mit zwei zusammensteckbaren Steckverbinderteilen.

### Beschreibung der Erfindung

Es ist die Aufgabe der vorliegenden Erfindung, eine besonders einfache und zuverlässige Abdichtung einer Ladedose eines Kraftfahrzeugs zu ermöglichen.

Diese Aufgabe wird durch ein Kontaktgehäuse für eine Ladedose eines Kraftfahrzeugs sowie durch ein Verfahren zum Herstellen einer Ladedose eines Kraftfahrzeugs mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Das erfindungsgemäße Kontaktgehäuse für eine Ladedose eines Kraftfahrzeugs umfasst eine Steckerschnittstelle mit mehreren Aufnahmeöffnungen zum Aufnehmen jeweiliger Kontaktstifte, die zum Aufladen einer Batterie des Kraftfahrzeugs mit einem Ladestecker kontaktierbar sind, wobei das Kontaktgehäuse ein Mehrkomponentenspritzgussteil ist, dessen Hauptkörper aus einer ersten Komponente hergestellt ist, und zumindest jeweilige Umrandungen der Aufnahmeöffnungen bildende Dichtungsbereiche aus einer zweiten Komponente hergestellt sind, die elastischer als die erste Komponente ist. Vorzugsweise ist die zweite Komponente auch weicher als die erste Komponente. Die zweite Komponente fungiert als Dichtungswerkstoff, der die jeweiligen Umrandungen der Aufnahmeöffnungen in Form der Dichtungsbereiche bildet. Nachdem die Kontaktstifte in ihrer bestimmungsgemäßen Weise innerhalb der Aufnahmeöffnungen des Kontaktgehäuses montiert worden sind, umschließen die Dichtungsbereiche, welche aus der zweiten elastischen und vorzugsweise weichen Komponente hergestellt sind, die entsprechenden Kontaktstifte formschlüssig. Bei fertig montierter Ladedose kann in dem Fall also vorzugsweise weder Staub noch Flüssigkeit im Bereich der Kontaktstifte in die Ladedose eindringen.

Bei den Kontaktstiften kann es sich sowohl um stromführende Kontakte handeln, welche zum Aufladen der besagten Batterie dienen, als auch um signalführende Kontakte, wie einen sogenannten Proximity-Pilot bzw. Control-Pilot.

Bei dem Kontaktgehäuse handelt es sich also zumindest um ein Zweikomponentenspritzgussteil aus der besagten ersten Komponente und zweiten Komponente. Bei dem erfindungsgemäßen Kontaktgehäuse wird eine dauerhafte und zuverlässige Abdichtung des Kontaktgehäuses und somit der Ladedose im Bereich der Kontaktstifte ermöglicht. Zudem können die Dichtungsbereiche besonders einfach hergestellt werden, da diese im Zuge des Mehrkomponentenspritzgussverfahrens auf einfache Weise hergestellt werden können. Die Dichtungsbereiche sind keine separaten Teile bzw. Elemente, welche erst aufwendig montiert und überprüft werden müssen. Dadurch ergibt sich im Hinblick auf eine Herstellung des Kontaktgehäuses auch eine besonders prozesssichere Abdichtungsmöglichkeit der besagten Kontaktstifte im montierten Zustand. Das erfindungsgemäße Kontaktgehäuse stellt also eine besonders einfache und zuverlässige Abdichtung im Bereich der Kontaktstifte sicher.

Die Hauptausführungsform der Erfindung sieht vor, dass der Hauptkörper des Kontaktgehäuses ein Kanalsystem aus mehreren Nuten aufweist, welche sich ausgehend von zumindest einem Anspritzpunkt für die zweite Komponente bis zu den jeweiligen Aufnahmeöffnungen erstrecken und von der zweiten Komponente ausgefüllt sind. Mit anderen Worten ist in Form des aus den Nuten bestehenden Kanalsystems eine definierte Kontur in den Hauptkörper des Kontaktgehäuses eingebracht, welche von der zweiten Komponente ausgefüllt ist. Das Kanalsystem dient während eines Spritzgussvorgangs dazu, ausgehend vom besagten Anspritzpunkt die zweite Komponente einzuspritzen, wobei diese sich entlang des Kanalsystems bis zu den jeweiligen Aufnahmeöffnungen fortbewegen kann, um dann die besagten Umrandungen auszubilden, welche als Dichtungsbereiche fungieren.

Das Kanalsystem aus den Nuten ist dabei so gestaltet, dass sich ein besonders zuverlässiger Einspritz- und Verteilvorgang der zweiten Komponente realisieren lässt.

Eine vorteilhafte Ausführungsform der Erfindung sieht vor, dass die zweite Komponente aus einem Elastomer hergestellt ist. Es können auch andere elastische Dichtmaterialien für die zweite Komponente verwendet werden. Bei der ersten Komponente kann es sich beispielsweise um einen Thermoplast handeln. Die erste Komponente sorgt für die Aufnahme von Kräften und für eine ausreichende Formstabilität des Kontaktgehäuses, wohingegen die zweite Komponente vor allem die besagte Abdichtwirkung rund um die Kontaktstifte im montierten Zustand bewirkt. Durch eine geeignete Materialauswahl betreffend die erste und zweite Komponente können sowohl mechanische als auch abdichtende Eigenschaften gleichermaßen mittels des Kontaktgehäuses erfüllt werden.

Eine weitere vorteilhafte Ausführungsform der Erfindung sieht vor, dass das Kontaktgehäuse außerhalb der Steckerschnittstelle wenigstens eine weitere Aufnahmeöffnung zum Aufnehmen eines Lichtleiters für eine Beleuchtungseinrichtung der Ladedose aufweist, wobei diese Aufnahmeöffnung ebenfalls von einem aus der zweiten Komponente hergestellten Dichtungsbereich umschlossen ist. Die Beleuchtungseinrichtung kann z.B. dazu dienen, während eines Ladevorgangs die Ladedose ausreichend auszuleuchten oder kann auch als Informations- oder Signalleuchte dienen, z.B. um einen Ladezustand anzuzeigen oder einen Ladevorgang zu signalisieren. Dadurch, dass das Kontaktgehäuse außerhalb der Steckerschnittstelle die wenigstens eine weitere Aufnahmeöffnung zum Aufnehmen des Lichtleiters für die Beleuchtungseinrichtung aufweist, kann die besagte Beleuchtungseinrichtung besonders einfach mit Licht versorgt werden. Dadurch, dass diese Aufnahmeöffnung ebenfalls von dem aus der zweiten Komponente hergestellten Dichtungsbereich umschlossen ist, kann auch in diesem Bereich zuverlässig verhindert werden, dass Staub und/oder Flüssigkeit ins Innere der Ladedose eindringt.

Gemäß einer weiteren vorteilhaften Ausführungsform der Erfindung ist es vorgesehen, dass wenigstens einer der Dichtungsbereiche eine nach radial innen und/oder axial erhabene Dichtstruktur aufweist. Die Struktur kann beispielsweise halbkugelförmige oder lamellenförmige Elemente aufweisen. Um eine besonders zuverlässige Abdichtung zu erzielen, kann es vorgesehen sein, dass auf Umfangsflächen oder auch stirnseitigen Flächen bei zumindest einem der Dichtungsbereiche zum Beispiel Gummilippen oder anderweitige erhabene Dichtstrukturen vorgesehen sind. Dadurch kann der betreffende Kontaktstift oder Lichtleiter besonders zuverlässig gegen Staubeintritt und/oder Flüssigkeitseintritt abgedichtet werden. Auch ist es möglich, dass alle Dichtungsbereiche mit dieser Dichtstruktur versehen sind.

Die erfindungsgemäße Ladedose für ein Kraftfahrzeug umfasst das erfindungsgemäße Kontaktgehäuse oder eine vorteilhafte Ausführungsform des erfindungsgemäßen Kontaktgehäuses, wobei durch die Aufnahmeöffnungen der Steckerschnittstelle jeweilige Kontaktstifte der Ladedose hindurchgeführt und von den die jeweiligen Umrandungen der Aufnahmeöffnungen bildenden Dichtungsbereiche des Kontaktgehäuses umschlossen sind. Im fertig montierten Zustand der Ladedose kommen also die aus der zweiten Komponente hergestellten Dichtungsbereiche zum Tragen, welche die jeweiligen Kontaktstifte umschließen und so die Ladedose in diesen Bereichen gegenüber einem Flüssigkeitseintritt und/oder Staubeintritt zuverlässig abdichten.

Bei dem erfindungsgemäßen Verfahren zum Herstellen einer Ladedose eines Kraftfahrzeugs, umfassend ein Kontaktgehäuse, welches eine Steckerschnittstelle mit mehreren Aufnahmeöffnungen zum Aufnehmen jeweiliger Kontaktstifte der Ladedose aufweist, die zum Aufladen einer Batterie des Kraftfahrzeugs mit einem Ladestecker kontaktierbar sind, wird das Kontaktgehäuse mittels eines Spritzgießwerkzeugs in einem Mehrkomponentenspritzgussverfahren hergestellt, indem ein Hauptkörper des Kontaktgehäuses aus einer ersten Komponente und zumindest jeweilige Umrandungen der Aufnahmeöffnungen bildende Dichtungsbereiche aus einer zweiten Komponente hergestellt werden, welche elastischer als die erste Komponente ist. Vorteilhafte Ausgestaltungen des erfindungsgemäßen Kontaktgehäuses bzw. der erfindungsgemäßen Ladedose sind als vorteilhafte Ausgestaltungen des erfindungsgemäßen Verfahrens und umgekehrt anzusehen. Mittels des erfindungsgemäßen Verfahrens kann insbesondere das erfindungsgemäße Kontaktgehäuse oder eine vorteilhafte Ausführungsform des erfindungsgemäßen Kontaktgehäuses besonders einfach und zuverlässig hergestellt werden. Dadurch, dass ein Mehrkomponentenspritzgussverfahren, insbesondere ein Zweikomponentenspritzgussverfahren, zum Einsatz kommt, können die Dichtungsbereiche aus der zweiten Komponente auf einfache Weise als integraler Bestandteil des Kontaktgehäuses hergestellt werden. Aufwendige Montagetätigkeiten zur Anbringung von anderweitigen separaten Dichtungen, beispielsweise Silikondichtungen oder dergleichen, können bei dem erfindungsgemäßen Verfahren entfallen. Dadurch lässt sich besonders prozesssicher, schnell und kostengünstig eine zuverlässige Abdichtwirkung insbesondere rund um die Kontaktstifte der Ladedose realisieren.

Es ist es vorgesehen, dass vor einem Einspritzen der ersten Komponente in das Spritzgießwerkzeug jeweilige bewegliche Kerne des Spritzgießwerkzeugs so angeordnet werden, dass aus der ersten Komponente ein Hauptkörper des Kontaktgehäuses mit einem Kanalsystem aus mehreren Nuten gemäß der Anordnung der Kerne hergestellt wird, wonach die Kerne so aus den Nuten herausbewegt werden, dass zwischen den Kernen und Nuten ein Hohlraum eingeschlossen wird, in welchen ausgehend von zumindest einem Anspritzpunkt des Kanalsystems die zweite Komponente unter Ausbildung der Dichtungsbereiche eingespritzt wird. Mittels der beweglichen Kerne wird also das besagte Kanalsystem innerhalb des Hauptkörpers des Kontaktgehäuses hergestellt bzw. realisiert, welcher aus der ersten Komponente durch Spritzguss hergestellt wird. Nachdem innerhalb des Spritzgießwerkzeugs der Hauptkörper des Kontaktgehäuses mit dem besagten Kanalsystem hergestellt worden ist, werden sodann die beweglichen Kerne soweit aus den Nuten des Kanalsystems herausbewegt, dass ein entsprechender Hohlraum bereitgestellt wird, in welchen dann ausgehend von dem zumindest einen Anspritzpunkt des Kanalsystems die zweite Komponente unter Ausbildung der Dichtungsbereiche eingespritzt wird. So kann die zweite Komponente bis zu den gewünschten und herzustellenden Dichtungsbereichen gelangen. Anschließend kann das fertighergestellte Kontaktgehäuse aus dem Spritzgießwerkzeug entformt werden. Das Kanalsystem im Hauptkörper stellt also jeweilige Fließwege bis zu den Aufnahmeöffnungen sicher, wo die zweite Komponente als Dichtung fungieren soll.

Eine vorteilhafte Ausführungsform des erfindungsgemäßen Verfahrens sieht vor, dass nach dem Herstellen des Kontaktgehäuses die jeweiligen Kontaktstifte durch die von den Dichtungsbereichen umschlossenen Aufnahmeöffnungen hindurchgeführt und innerhalb der Steckerschnittstelle angeordnet werden. Nachdem also das Kontaktgehäuse durch das Mehrkomponentenspritzgussverfahren hergestellt worden ist, erfolgt die eigentliche Montage der Ladedose, wobei dabei unter anderem die jeweiligen Kontaktstifte durch die von den Dichtungsbereichen umschlossenen Aufnahmeöffnungen hindurchgeführt und innerhalb der Steckerschnittstelle angeordnet werden. Die Dichtungsbereiche aus der zweiten Komponente, bei welcher es sich vorzugsweise um ein besonders geeignetes Dichtungsmaterial handelt, umschließen nach der bestimmungsgemäßen Anordnung der Kontaktstifte innerhalb der Steckerschnittstelle die Kontaktstifte flüssigkeitsdicht und/oder staubdicht. Mittels der ins Kontaktgehäuse integrierten Dichtungsbereiche können so die montierten Kontaktstifte zuverlässig umschlossen werden, um eine hinreichende Abdichtwirkung in diesem Bereich der Ladedose zu erzielen.

In weiterer vorteilhafter Ausgestaltung des erfindungsgemäßen Verfahrens ist es vorgesehen, dass zumindest ein Teil der Kerne nach dem Einspritzen der zweiten Komponente zum Entfernen von überschüssigem Material der zweiten Komponente relativ zum Hauptkörper des Kontaktgehäuses bewegt wird. So können beispielsweise Grate oder anderweitig überstehende Bereiche der zweiten Komponente auf einfache Weise mittels der beweglichen Kerne entfernt werden.

Schließlich sieht eine weitere vorteilhafte Ausführungsform des erfindungsgemäßen Verfahrens vor, dass zumindest einer der Kerne so ausgestaltet ist und/oder angeordnet wird, dass wenigstens eine der Aufnahmeöffnungen durch die eingespritzte zweite Komponente vollständig verschlossen wird. Je nachdem, wie viele Aufnahmeöffnungen tatsächlich erforderlich sind, ist es so auf einfache Weise möglich, nicht benötigte Aufnahmeöffnungen einfach durch die eingespritzte zweite Komponente zu verschließen. Bei unterschiedlichen Varianten an erforderlichen Aufnahmeöffnungen muss so nicht das gesamte Spritzgießwerkzeug umgestaltet werden. Lediglich die Bewegung der betreffenden Kerne wird angepasst, je nachdem welche der Aufnahmeöffnungen gegebenenfalls durch die eingespritzte zweite Komponente vollständig verschlossen bleiben sollen.

Weitere Vorteile, Merkmale und Einzelheiten der Erfindung ergeben sich aus der nachfolgenden Beschreibung bevorzugter Ausführungsbeispiele sowie anhand der Zeichnung. Die Erfindung ist durch die Ansprüche definiert.

### Kurze Figurenbeschreibung

Die Zeichnung zeigt in:
- Fig. 1: eine Perspektivansicht einer Ladedose eines Kraftfahrzeugs, umfassend ein Kontaktgehäuse mit einer Steckerschnittstelle, die mehrere Aufnahmeöffnungen zum Aufnehmen eines Ladesteckers aufweist;
- Fig. 2: eine perspektivische Ansicht auf eine Vorderseite des Kontaktgehäuses, wobei mehrere Kontaktstifte der Ladedose in zwei Bereichen der Steckerschnittstelle angeordnet sind;
- Fig. 3: eine perspektivische Ansicht auf eine Rückseite des Kontaktgehäuses mit den darin angeordneten Kontaktstiften;
- Fig. 4: eine weitere perspektivische Ansicht auf die Vorderseite des Kontaktgehäuses, wobei die Kontaktstifte nicht dargestellt sind;
- Fig. 5: eine Draufsicht auf eine von der Steckerschnittstelle des Kontaktgehäuses abgewandte Rückseite;
- Fig. 6: eine teilweise geschnittene Perspektivansicht des Kontaktgehäuses entlang der in Fig. 5 gekennzeichneten Schnittebene C-C;
- Fig. 7: eine Detailansicht des in Fig. 6 gekennzeichneten Bereichs A, wobei eine erste Ausführungsform eines Dichtungsbereichs dargestellt ist; und in
- Fig. 8: eine weitere Detailansicht des in Fig. 6 gekennzeichneten Bereichs A, wobei eine zweite Ausführungsform des Dichtungsbereichs dargestellt ist.

In den Figuren sind gleiche oder funktionsgleiche Elemente mit den gleichen Bezugszeichen versehen worden.

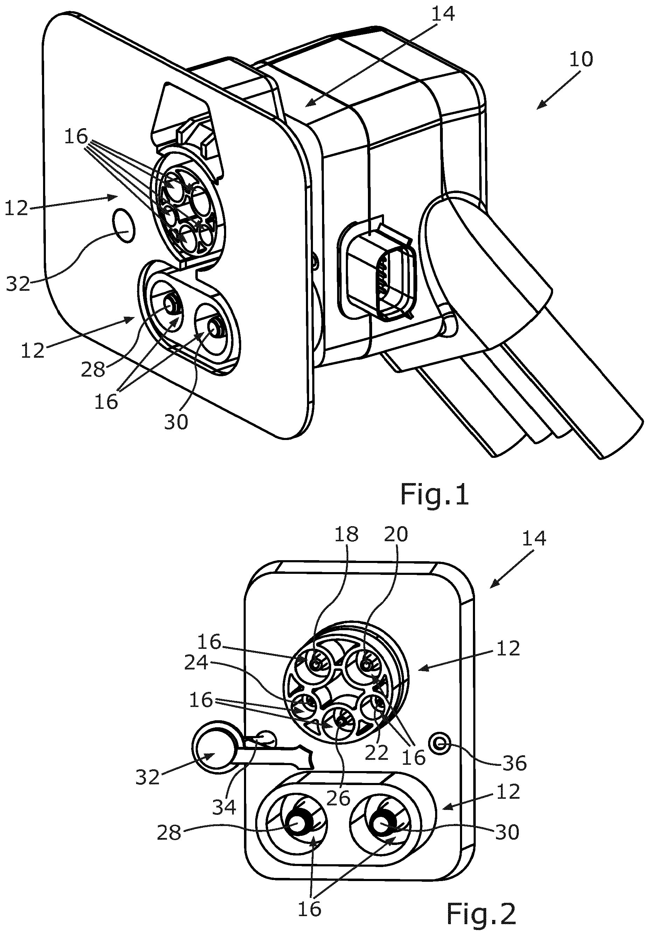

Eine Ladedose 10 für ein Kraftfahrzeug ist in einer Perspektivansicht in Fig. 1 gezeigt. Die Ladedose 10 wird fahrzeugseitig verbaut und dient zum Aufnehmen eines hier nicht dargestellten Ladesteckers, mittels welchem eine Batterie des Kraftfahrzeugs aufgeladen werden kann, bei welchem es sich beispielsweise um ein vollelektrisches Fahrzeug oder auch um einen Plug-In-Hybrid handeln kann. Zum Aufnehmen des hier nicht dargestellten Ladesteckers umfasst die Ladedose 10 eine Steckerschnittstelle 12, welche Teil eines Kontaktgehäuses 14 der Ladedose 10 ist. Ein nicht näher bezeichneter oberer Bereich der Steckerschnittstelle 12 umfasst fünf Aufnahmeöffnungen 16 und ein unterer nicht näher bezeichneter Bereich der Steckerschnittstelle 12 umfasst zudem noch zwei weitere Aufnahmeöffnungen 16 zum Aufnehmen jeweiliger hier nicht näher bezeichneter Kontaktstifte, die zum Aufladen der besagten Batterie des Kraftfahrzeugs mit dem Ladestecker kontaktierbar sind.

In Fig. 2 ist eine Vorderseite des Kontaktgehäuses 14 in einer Perspektivansicht gezeigt, innerhalb welcher die Steckerschnittstelle 12 nochmals gut zu erkennen ist. In dem kreisförmigen oberen Bereich der Steckerschnittstelle 12 sind mehrere mittels der Aufnahmeöffnung 16 aufgenommene Kontaktstifte 18, 20, 22, 24, 26 zu erkennen. Bei dem Kontaktstift 18 kann es sich beispielsweise um einen Pluspol für einen Wechselstromanschluss handeln. Bei dem Kontaktstift 20 kann es sich um einen Minuspol des Wechselstromanschlusses handeln, wobei es sich bei dem Kontaktstift 22 um einen Schutzleiter bzw. eine Erdung des Wechselstromanschlusses handeln kann. Bei dem Kontaktstift 24 handelt es sich beispielsweise um einen Signalkontakt zur Schnittstellenkommunikation zwischen der Ladedose 10 und dem betreffenden Kraftfahrzeug. Bei dem Kontaktstift 26 kann es sich um einen Signalkontakt zur Kommunikation mit der betreffenden Ladesäule handeln, einem sogenannten Proximity-Pilot.

In dem eher ovalen unteren Bereich der Steckerschnittstelle 12 sind noch weitere Kontaktstifte 28, 30 zu erkennen. Bei dem Kontaktstift 28 kann es sich beispielsweise um einen Pluspol eines Gleichstromanschlusses und bei dem Kontaktstift 30 um einen Minuspol des Gleichstromanschlusses handeln. Zudem ist noch eine Beleuchtungseinrichtung 32 zu erkennen, welche am Kontaktgehäuse 14 angebracht ist und ein Teil der Ladedose 10 sein kann. Die Beleuchtungseinrichtung 32 wird von einem Lichtleiter 34 mit Licht versorgt. Die Beleuchtungseinrichtung 32 kann beispielsweise im Dunkeln oder bei schlechten Sichtverhältnissen dafür sorgen, dass ein Benutzer den besagten Ladestecker besonders einfach passend an der Steckerschnittstelle 12 positionieren und einstecken kann. Die Ladedose 10 kann mehrere dieser Beleuchtungseinrichtungen 32 und Lichtleiter 34 aufweisen, wobei je Lichtleiter 34 weitere Aufnahmeöffnungen 36 vorgesehen sind. Die Aufnahmeöffnungen 16 und 36 sollten so abgedichtet sein, dass bei montierten Kontaktstiften 18 bis 26 bzw. 28 bis 30 und montierten Lichtleitern 34 kein Staub und/oder Flüssigkeiten ins Innere der Ladedose 10 eindringen können.

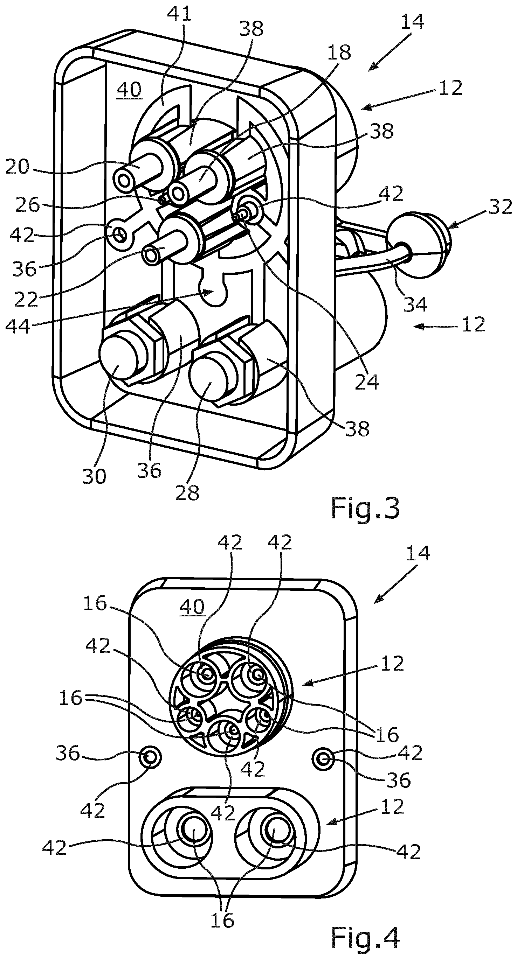

In Fig. 3 ist das Kontaktgehäuse 14 in einer perspektivischen Rückansicht gezeigt. Hier sind rückseitig nochmals die besagten Kontaktstifte 18 bis 26 und 28, 30 sowie der Lichtleiter 34 zu erkennen. Für die Kontaktstifte 18 bis 22 und 28, 30 sind jeweilige hülsenartige Aufnahmen 38 vorgesehen.

Das Kontaktgehäuse 14 ist ein Zweikomponentenspritzgussteil, dessen Hauptkörper 40 aus einer ersten nicht näher bezeichneten Komponente hergestellt ist, wobei jeweilige als Umrandungen der Aufnahmeöffnungen 16 bzw. 36 ausgebildete Dichtungsbereiche 42 (hier nur teilweise zu erkennen) aus einer zweiten Komponente 41 hergestellt sind, die elastischer und/oder weicher als die erste Komponente ist. Die zweite Komponente 41 ist, wie zu erkennen, nicht nur unmittelbar im Bereich der Aufnahmeöffnungen, 16, 36 vorgesehen. Die zweite Komponente 41 kann beispielsweise ein Elastomer sein, wohingegen die erste Komponente beispielsweise ein Thermoplast sein kann. Der Hauptkörper 40 des Kontaktgehäuses 14 umfasst ein hier nicht näher bezeichnetes Kanalsystem aus mehreren nicht näher bezeichneten Nuten, welche sich ausgehend von zumindest einem Anspritzpunkt 44 für die zweite Komponente 41 bis zu den jeweiligen Aufnahmeöffnungen 16, 36 erstrecken und von der zweiten Komponente 41 ausgefüllt sind.

In Fig. 4 ist das Kontaktgehäuse 14 aus der gleichen Perspektive wie in Fig. 2 gezeigt, wobei sämtliche Kontaktstifte 18 bis 26, 28, 30 sowie die Beleuchtungseinrichtung 32 inklusive Lichtleiter 34 weggelassen worden sind. In der vorliegenden Darstellung sind aufgrund der weggelassenen Kontaktstifte 18 bis 26, 28, 30 die Aufnahmeöffnungen 16, 36 für die Kontaktstifte 18 bis 26 sowie 28 bis 30 sowie für den Lichtleiter 34 gut zu erkennen. Des Weiteren kann man in dieser Darstellung gut die aus der zweiten Komponente 41 gebildeten Dichtungsbereiche 42 erkennen, welche die Aufnahmeöffnungen 16 bzw. 36 umgeben. Die Aufnahmeöffnungen 16, 36 sind vorliegend rund und die Dichtungsbereiche 42 entsprechend zumindest im Wesentlichen kreisringförmig. Das liegt daran, dass die Kontaktstifte 18 bis 26, 28, 30 und der Lichtleiter 34 vorliegend einen runden Querschnitt aufweisen. Wesentlich ist, dass die Geometrie der Aufnahmeöffnungen 16, 36 und somit auch der Dichtungsbereiche 42 an die Querschnittsform der Kontaktstifte 18 bis 26, 28, 30 und des Lichtleiters 34 angepasst ist, um einen Formschluss und somit eine gute Abdichtwirkung zu erzielen.

Im montierten Zustand der Kontaktstifte 18 bis 26 sowie 28, 30 und im montierten Zustand des Lichtleiters 34 umschließen die Dichtungsbereiche 42 diese Elemente beispielsweise staubdicht und flüssigkeitsdicht. Dadurch, dass die zweite Komponente 41 weicher als die erste Komponente ist, aus welchem der Hauptkörper 40 des Kontaktgehäuses 14 hergestellt ist, kann auf besonders zuverlässige Weise eine Dichtwirkung erzielt werden.

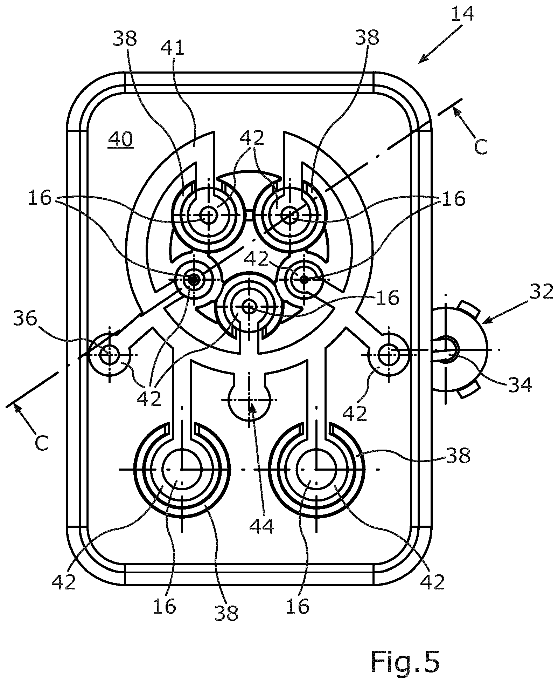

In Fig. 5 ist das Kontaktgehäuse 14 in einer Frontalansicht von hinten gezeigt. Hier kann man nochmal gut die Anordnung der zweiten Komponente 41 innerhalb des Hauptkörpers 40 erkennen. Ausgehend vom besagten Anspritzpunkt 44 erstreckt sich die zweite Komponente 41 kanalartig bis zu den jeweiligen Aufnahmeöffnungen 16 bzw. 36, welche durch die Dichtungsbereiche 42 umschlossen sind, die aus der zweiten Komponente 41 gebildet sind. Das Kontaktgehäuse 14 wird mittels eines hier nicht dargestellten Spritzgießwerkzeugs in einem Zweikomponentenspritzgussverfahren hergestellt. Zunächst wird dabei der Hauptkörper 40 des Kontaktgehäuses 14 aus der ersten Komponente hergestellt. Anschließend wird die zweite Komponente 41 am Anspritzpunkt 44 in das Spritzgießwerkzeug eingespritzt. Ausgehend vom Anspritzpunkt 44 verteilt sich die eingespritzte zweite Komponente dann bis zu den Aufnahmeöffnungen 16 bzw. 36 und bildet dort die besagten Dichtungsbereiche 42 aus.

Vor dem Einspritzen der ersten Komponente, aus welcher der Hauptkörper 40 hergestellt wird, können jeweilige bewegliche Kerne des besagten Spritzgießwerkzeugs so angeordnet werden, dass aus der ersten Komponente der Hauptkörper 40 mit dem besagten Kanalsystem aus den mehreren Nuten gemäß der Anordnung der Kerne hergestellt wird. Danach werden die Kerne so aus den Nuten herausbewegt - gemäß der vorliegenden Darstellung also senkrecht zur Zeichnungsebene - das zwischen den Kernen und Nuten ein Hohlraum eingeschlossen wird, in welchen ausgehend vom Anspritzpunkt 44 des Kanalsystems die zweite Komponente 41 unter Ausbildung der Dichtungsbereiche 42 eingespritzt wird. Die Kerne können nach dem Einspritzen der zweiten Komponente 41 beispielsweise auch zum Entfernen von überschüssigem Material der zweiten Komponente 41 relativ zum Hauptkörper 40 des Kontaktgehäuses 14 bewegt werden. Falls eine oder auch mehrere der Aufnahmeöffnungen 16 bzw. 36 verschlossen werden sollen, so ist es auch möglich, dass die betreffenden Kerne so ausgestaltet sind und/oder so angeordnet werden, dass die betreffenden Aufnahmeöffnungen 16, 36 durch die eingespritzte zweite Komponente 41 vollständig verschlossen werden und bleiben.

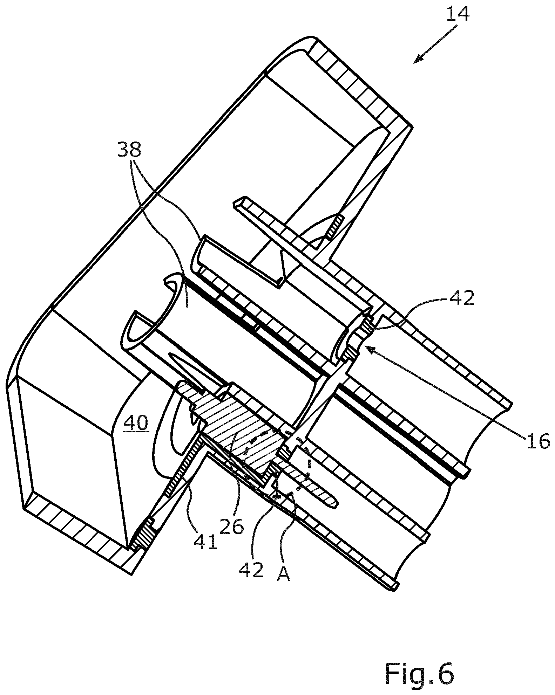

In Fig. 6 ist das Kontaktgehäuse 14 in einer teilweise geschnittenen Perspektivansicht entlang der in Fig. 5 gekennzeichneten Schnittebene C-C gezeigt. In der vorliegenden Darstellung kann man gut erkennen, wie sich die zweite Komponente 41, welche als Dichtmaterial dient, innerhalb der hier ebenfalls nicht näher bezeichneten Nuten des Kanalsystems des Hauptkörpers 40 bis zu den jeweiligen Aufnahmeöffnungen 16 erstreckt, in denen in der vorliegenden Darstellung nur einer der Kontaktstifte 26 dargestellt und angeordnet ist. Durch entsprechende Ausgestaltung und Bewegung der besagten Kerne des Spritzgießwerkzeugs ist es möglich, im Zweikomponentenspritzgießverfahren zunächst den Hauptkörper 40 aus der ersten Komponente und anschließend die Dichtungsbereiche 42 aus der ersten Komponente herzustellen. Durch die gut abdichtenden und elastischen Eigenschaften der zweiten Komponente 41 ist es auf einfache Weise möglich, die Ladedose 10 rund um die Kontaktstifte 18 bis 26 bzw. 28, 30 sowie die Lichtleiter 34 abzudichten. Im Zuge der Herstellung des Kontaktgehäuses 14 ist es zudem nicht erforderlich, die Dichtungsbereiche 42 aus separaten Teilen, beispielsweise Silikoneinlegern oder dergleichen, erst aufwendig zu montieren und zu prüfen. Stattdessen ist es mittels eines Herstellungsvorgangs, nämlich mittels des Zweikomponentenspritzgussverfahrens, möglich, die Dichtungsbereiche 42 als integralen Bestandteil des Kontaktgehäuses 14 herzustellen.

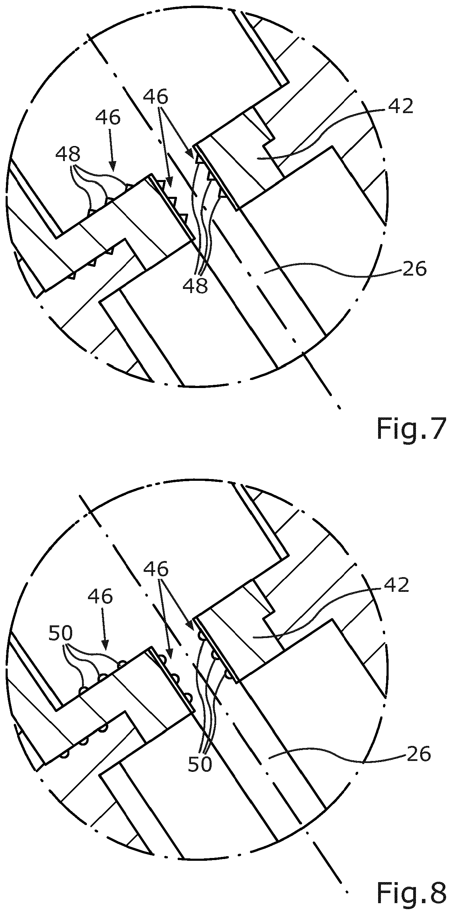

In Fig. 7 ist der in Fig. 6 gekennzeichnete Bereich A in einer Detailansicht gezeigt, wobei eine erste Ausführungsform einer Dichtstruktur 46 des hier exemplarisch gezeigten Dichtungsbereichs 42 dargestellt ist. Der Dichtungsbereich 42 umfasst vorliegend eine nach radial innen und axial erhabene Dichtstruktur 46, welche vorliegend in Form von im Wesentlichen dreiecksförmigen bzw. pyramidenförmigen Erhebungen ausgebildet ist. Dadurch kann eine besonders gute Abdichtwirkung erzielt werden.

In Fig. 8 ist der in Fig. 6 gekennzeichnete Bereich A in einer weiteren Detailansicht gezeigt, wobei eine zweite mögliche Ausführungsform der Dichtstruktur 46 dargestellt ist. Im vorliegend gezeigten Fall umfasst die Dichtstruktur 46 mehrere halbkugelförmige Elemente 50, welche ebenfalls nach radial innen und axial erhaben ausgebildet sind. Dadurch kann ebenfalls eine besonders gute Abdichtwirkung erreicht werden.

Das Kontaktgehäuse 14 als Mehrkomponentenspritzgussteil, insbesondere als Zweikomponentenspritzgussteil, herzustellen, um die integrierten Dichtungsbereiche 42 zu realisieren, ist nicht nur auf die in den Figuren gezeigte konkrete Steckerschnittstelle 12 beschränkt. Das beschriebene Prinzip kann auf unterschiedlich viele Kontaktstifte und unterschiedlich ausgebildete Steckerschnittstellen 12 übertragen werden, um im Bereich der Aufnahmeöffnungen 16 bzw. 36 eine besonders einfache und zuverlässige Abdichtwirkung zu erzielen.

### BEZUGSZEICHENLISTE

- 10: Ladedose
- 12: Steckerschnittstelle des Kontaktgehäuses
- 14: Kontaktgehäuse
- 16: Aufnahmeöffnungen der Steckerschnittstelle
- 18: Kontaktstift
- 20: Kontaktstift
- 22: Kontaktstift
- 24: Kontaktstift
- 26: Kontaktstift
- 28: Kontaktstift
- 30: Kontaktstift
- 32: Beleuchtungseinrichtung der Ladedose
- 34: Lichtleiter der Ladedose
- 36: Aufnahmeöffnung außerhalb der Steckerschnittstelle für den Lichtleiter
- 38: hülsenartige Aufnahme für einige der Kontaktstifte
- 40: Hauptkörper des Kontaktgehäuses
- 41: zweite Komponente des Kontaktgehäuses
- 42: Dichtungsbereiche des Kontaktgehäuses
- 44: Einspritzpunkt
- 46: Dichtstruktur
- 48: Elemente der Dichtstruktur
- 50: Elemente der Dichtstruktur

## Patentansprüche

1. Kontaktgehäuse (14) für eine Ladedose (10) eines Kraftfahrzeugs, umfassend eine Steckerschnittstelle (12) mit mehreren Aufnahmeöffnungen (16) zum Aufnehmen jeweiliger Kontaktstifte (18, 20, 22, 24, 26, 28, 30), die zum Aufladen einer Batterie des Kraftfahrzeugs mit einem Ladestecker kontaktierbar sind, wobei das Kontaktgehäuse (14) ein Mehrkomponentenspritzgussteil ist, dessen Hauptkörper (40) aus einer ersten Komponente hergestellt ist, und zumindest jeweilige Umrandungen der Aufnahmeöffnungen (16) bildende Dichtungsbereiche (42) aus einer zweiten Komponente (41) hergestellt sind, die elastischer als die erste Komponente ist,
**dadurch gekennzeichnet, dass**
der Hauptkörper (40) des Kontaktgehäuses (14) ein Kanalsystem aus mehreren Nuten aufweist, welche sich ausgehend von zumindest einem Anspritzpunkt (44) für die zweite Komponente (41) bis zu den jeweiligen Aufnahmeöffnungen (16, 36) erstrecken und von der zweiten Komponente (41) ausgefüllt sind.

2. Kontaktgehäuse (14) nach Anspruch 1,
**dadurch gekennzeichnet, dass**
die zweite Komponente (41) aus einem Elastomer hergestellt ist.

3. Kontaktgehäuse (14) nach Anspruch 1 oder 2,
**dadurch gekennzeichnet, dass**
das Kontaktgehäuse (14) außerhalb der Steckerschnittstelle (12) wenigstens eine weitere Aufnahmeöffnung (36) zum Aufnehmen eines Lichtleiters (34) für eine Beleuchtungseinrichtung (32) der Ladedose (10) aufweist, wobei diese Aufnahmeöffnung (36) ebenfalls von einem aus der zweiten Komponente (41) hergestellten Dichtungsbereich (42) umschlossen ist.

4. Kontaktgehäuse (14) nach einem der vorhergehenden Ansprüche,
**dadurch gekennzeichnet, dass**
wenigstens einer der Dichtungsbereiche (42) eine nach radial innen und/oder axial erhabene Dichtstruktur (46) aufweist.

5. Kontaktgehäuse (14) nach Anspruch 4,
**dadurch gekennzeichnet, dass**
die Dichtstruktur (46) halbkugelförmige oder lamellenförmige Elemente (48, 50) aufweist.

6. Ladedose (10) für ein Kraftfahrzeug, umfassend ein Kontaktgehäuse (14) nach einem der vorhergehenden Ansprüche, bei welchem durch die Aufnahmeöffnungen (16, 36) der Steckerschnittstelle (12) jeweilige Kontaktstifte (18, 20, 22, 24, 26, 28, 30) der Ladedose (10) hindurchgeführt und von den die jeweiligen Umrandungen der Aufnahmeöffnungen (16, 36) bildenden Dichtungsbereichen (42) des Kontaktgehäuses (14) umschlossen sind.

7. Verfahren zum Herstellen einer Ladedose (10) eines Kraftfahrzeugs, umfassend ein Kontaktgehäuse (14), welches eine Steckerschnittstelle (12) mit mehreren Aufnahmeöffnungen (16, 36) zum Aufnehmen jeweiliger Kontaktstifte (18, 20, 22, 24, 26, 28, 30) der Ladedose (10) aufweist, die zum Aufladen einer Batterie des Kraftfahrzeugs mit einem Ladestecker kontaktierbar sind, bei welchem das Kontaktgehäuse (14) mittels eines Spritzgießwerkzeugs in einem Mehrkomponentenspritzgussverfahren herstellt wird, indem ein Hauptkörper (40) des Kontaktgehäuses (14) aus einer ersten Komponente und zumindest jeweilige Umrandungen der Aufnahmeöffnungen (16) bildende Dichtungsbereiche (42) aus einer zweiten Komponente (41) hergestellt werden, welche elastischer als die erste Komponente ist,
wobei vor einem Einspritzen der ersten Komponente in das Spritzgießwerkzeug jeweilige bewegliche Kerne des Spritzgießwerkzeugs so angeordnet werden, dass aus der ersten Komponente ein Hauptkörper (40) des Kontaktgehäuses (14) mit einem Kanalsystem aus mehreren Nuten gemäß der Anordnung der Kerne hergestellt wird, wonach die Kerne so aus den Nuten herausbewegt werden, dass zwischen den Kernen und Nuten ein Hohlraum eingeschlossen wird, in welchen ausgehend von zumindest einem Anspritzpunkt (44) des Kanalsystems die zweite Komponente (41) unter Ausbildung der Dichtungsbereiche (42) eingespritzt wird.

8. Verfahren nach Anspruch 7,
**dadurch gekennzeichnet, dass**
nach dem Herstellen des Kontaktgehäuses (14) die jeweiligen Kontaktstifte (18, 20, 22, 24, 26, 28, 30) durch die von den Dichtungsbereichen (42) umschlossenen Aufnahmeöffnungen (16) hindurchgeführt und innerhalb der Steckerschnittstelle (12) angeordnet werden.

9. Verfahren nach einem der Ansprüche 7 oder 8,
**dadurch gekennzeichnet, dass**
zumindest ein Teil der Kerne nach dem Einspritzen der zweiten Komponente (41) zum Entfernen von überschüssigem Material der zweiten Komponente (41) relativ zum Hauptkörper (40) des Kontaktgehäuses (14) bewegt wird.

10. Verfahren nach einem der Ansprüche 7 bis 9,
**dadurch gekennzeichnet, dass**
zumindest einer der Kerne so ausgestaltet ist und/oder angeordnet wird, dass wenigstens eine der Aufnahmeöffnungen (16, 36) durch die eingespritzte zweite Komponente (41) vollständig verschlossen wird.

## Claims

1. Contact housing (14) for a charging socket (10) of a motor vehicle, comprising a plug interface (12) with a plurality of receiving openings (16) for receiving respective contact pins (18, 20, 22, 24, 26, 28, 30) which can be contacted by a charging plug for charging a battery of the motor vehicle, wherein the contact housing (14) is a multi-component injection-moulded part, the main body (40) of which is produced from a first component, and at least sealing regions (42), which form respective borders of the receiving openings (16), are produced from a second component (41) which is more elastic than the first component,
**characterized in that**
the main body (40) of the contact housing (14) has a channel system comprising several grooves which, starting from at least one gate point (44) for the second component (41), extend as far as the respective receiving openings (16, 36) and are filled by the second component (41).

2. Contact housing (14) according to Claim 1,
**characterized in that**
the second component (41) is produced from an elastomer.

3. Contact housing (14) according to Claim 1 or 2,
**characterized in that**
the contact housing (14) has at least one further receiving opening (36) for receiving a light guide (34) for a lighting device (32) of the charging socket (10) outside the plug interface (12), wherein this receiving opening (36) is likewise enclosed by a sealing region (42), which is produced from the second component (41).

4. Contact housing (14) according to one of the preceding claims,
**characterized in that**
at least one of the sealing regions (42) has a sealing structure (46) which is raised radially to the inside and/or axially.

5. Contact housing (14) according to Claim 4,
**characterized in that**
the sealing structure (46) has semi-spherical or lamellar elements (48, 50).

6. Charging socket (10) for a motor vehicle, comprising a contact housing (14) according to one of the preceding claims, in which respective contact pins (18, 20, 22, 24, 26, 28, 30) of the charging socket (10) are guided through the receiving openings (16, 36) of the plug interface (12) and are enclosed by the sealing regions (42) of the contact housing (14) which form the respective borders of the receiving openings (16, 36).

7. Method for producing a charging socket (10) of a motor vehicle, comprising a contact housing (14) which has a plug interface (12) with a plurality of receiving openings (16, 36) for receiving respective contact pins (18, 20, 22, 24, 26, 28, 30) of the charging socket (10), which contact pins can be contacted by a charging plug for charging a battery of the motor vehicle, in which method the contact housing (14) is produced using an injection mould in a multi-component injection-moulding process by way of a main body (40) of the contact housing (14) being produced from a first component and at least sealing regions (42), which form respective borders of the receiving openings (16), being produced from a second component (41) which is more elastic than the first component, wherein, before the first component is injected into the injection mould, respective moving cores of the injection mould are arranged such that a main body (40) of the contact housing (14) with a channel system comprising several grooves according to the arrangement of the cores is produced from the first component, after which the cores are moved out of the grooves such that a cavity is incorporated between the cores and grooves, the second component (41) being injected into the said cavity starting from at least one gate point (44) of the channel system so as to form the sealing regions (42).

8. Method according to Claim 7,
**characterized in that**,
after the contact housing (14) is produced, the respective contact pins (18, 20, 22, 24, 26, 28, 30) are guided through the receiving openings (16), which are enclosed by the sealing regions (42), and are arranged within the plug interface (12).

9. Method according to either of Claims 7 and 8,
**characterized in that**,
after the second component (41) is injected, at least some of the cores are moved relative to the main body (40) of the contact housing (14) for removing excess material of the second component (41).

10. Method according to one of Claims 7 to 9,
**characterized in that**
at least one of the cores has been configured and/or is arranged such that at least one of the receiving openings (16, 36) is completely closed by the injected second component (41).

## Revendications

1. Boîtier de contact (14) pour une borne de chargement (10) d'un véhicule automobile, comprenant une interface de connecteur (12) avec plusieurs ouvertures de réception (16) pour recevoir des broches de contact respectives (18, 20, 22, 24, 26, 28, 30), qui peuvent être mises en contact avec un connecteur de chargement pour charger une batterie du véhicule automobile, le boîtier de contact (14) étant une pièce moulée par injection à plusieurs composants, dont le corps principal (40) est fabriqué à partir d'un premier composant, et au moins des zones d'étanchéité (42) formant des bordures respectives des ouvertures de réception (16) sont fabriquées à partir d'un deuxième composant (41), qui est plus élastique que le premier composant,
**caractérisé en ce que**
le corps principal (40) du boîtier de contact (14) présente un système de canaux composé de plusieurs rainures, qui s'étendent à partir d'au moins un point d'injection (44) pour le deuxième composant (41) jusqu'aux ouvertures de réception respectives (16, 36) et qui sont remplies par le deuxième composant (41).

2. Boîtier de contact (14) selon la revendication 1, **caractérisé en ce que** le deuxième composant (41) est fabriqué à partir d'un élastomère.

3. Boîtier de contact (14) selon la revendication 1 ou 2, **caractérisé en ce que** le boîtier de contact (14) présente, en dehors de l'interface de connecteur (12), au moins une autre ouverture de réception (36) pour recevoir un guide de lumière (34) pour un dispositif d'éclairage (32) de la borne de chargement (10), cette ouverture de réception (36) étant également entourée par une zone d'étanchéité (42) fabriquée à partir du deuxième composant (41).

4. Boîtier de contact (14) selon l'une quelconque des revendications précédentes, **caractérisé en ce qu'**au moins l'une des zones d'étanchéité (42) présente une structure d'étanchéité (46) en relief radialement vers l'intérieur et/ou axialement.

5. Boîtier de contact (14) selon la revendication 4, **caractérisé en ce que** la structure d'étanchéité (46) présente des éléments hémisphériques ou lamellaires (48, 50) .

6. Borne de chargement (10) pour un véhicule automobile, comprenant un boîtier de contact (14) selon l'une quelconque des revendications précédentes, dans laquelle des broches de contact respectives (18, 20, 22, 24, 26, 28, 30) de la borne de chargement (10) passent à travers les ouvertures de réception (16, 36) de l'interface de connecteur (12) et sont entourées par les zones d'étanchéité (42) du boîtier de contact (14) formant les bordures respectives des ouvertures de réception (16, 36).

7. Procédé de fabrication d'une borne de chargement (10) d'un véhicule automobile, comprenant un boîtier de contact (14), qui présente une interface de connecteur (12) avec plusieurs ouvertures de réception (16, 36) pour recevoir des broches de contact respectives (18, 20, 22, 24, 26, 28, 30) de la borne de chargement (10), qui peuvent être mises en contact avec un connecteur de chargement pour charger une batterie du véhicule automobile, dans lequel le boîtier de contact (14) est fabriqué au moyen d'un outil de moulage par injection dans un procédé de moulage par injection à plusieurs composants, par le fait qu'un corps principal (40) du boîtier de contact (14) est fabriqué à partir d'un premier composant et au moins des zones d'étanchéité (42) formant des bordures respectives des ouvertures de réception (16) sont fabriquées à partir d'un deuxième composant (41), qui est plus élastique que le premier composant,
avant une injection du premier composant dans l'outil de moulage par injection, des noyaux mobiles respectifs de l'outil de moulage par injection étant agencés de telle sorte qu'à partir du premier composant, un corps principal (40) du boîtier de contact (14) est fabriqué avec un système de canaux composé de plusieurs rainures selon l'agencement des noyaux, après quoi les noyaux sont déplacés hors des rainures de manière à inclure entre les noyaux et les rainures une cavité dans laquelle, à partir d'au moins un point d'injection (44) du système de canaux, le deuxième composant (41) est injecté en formant les zones d'étanchéité (42).

8. Procédé selon la revendication 7, **caractérisé en ce qu'**après la fabrication du boîtier de contact (14), les broches de contact respectives (18, 20, 22, 24, 26, 28, 30) sont passées à travers les ouvertures de réception (16) entourées par les zones d'étanchéité (42) et sont agencées dans l'interface de connecteur (12).

9. Procédé selon l'une quelconque des revendications 7 ou 8, **caractérisé en ce qu'**au moins une partie des noyaux est déplacée par rapport au corps principal (40) du boîtier de contact (14) après l'injection du deuxième composant (41) pour éliminer l'excès de matière du deuxième composant (41).

10. Procédé selon l'une quelconque des revendications 7 à 9, **caractérisé en ce qu'**au moins l'un des noyaux est conçu et/ou agencé de telle sorte qu'au moins l'une des ouvertures de réception (16, 36) est complètement fermée par le deuxième composant (41) injecté.
